# EUROPÄISCHE PATENTANMELDUNG

(11) **EP 1 847 482 A1**
(43) Veröffentlichungstag der Anmeldung: **24.10.2007**
(21) Anmeldenummer: 07007575.9
(22) Anmeldetag: 13.04.2007
(51) Int. Cl.: B65D 88/54, B65G 65/48

(54) **Trommelfördersilo**

(30) Priorität: 20.04.2006 DE 102006018254
(71) Anmelder: Häfner, Jochen, Dipl.-Ing., 74572 Blaufelden (DE)
(72) Erfinder: Häfner, Jochen, Dipl.-Ing., 74572 Blaufelden (DE)
(74) Vertreter: Pöhner, Wilfried Anton, Dr.

(57) **Zusammenfassung**

Trommelfördersilo zur Lagerung und Förderung von Schüttgütern, insbesondere Holzhackschnitzeln, bestehend aus einem Hohlkörper (1), dessen Stirnflächen (14) durch die Innenwand (15) miteinander verbunden sind und dessen Mittelachse (11) in Bezug zur Erdoberfläche horizontal oder geneigt ausgerichtet ist, mit einer verschließbaren Einfüllöffnung (12) in der Innenwand und mit einer Auslassöffnung (13) in einer Stirnfläche oder in der Innenwand direkt angrenzend an die Stirnfläche wobei der Hohlkörper in Bezug auf seine Mittelachse rotationssymmetrisch oder als regelmäßiger Pyramidenstumpf geformt ist und die Stirnflächen die Form eines Kreises oder eines regelmäßigen Polygons aufweisen und auf oder in der größeren der beiden Stirnflächen eine rohrförmige Schöpfvorrichtung (2) angeordnet ist, deren Eintrittsöffnung (22) im Innenraum des Hohlkörpers an der Stelle seines größten Durchmessers angeordnet ist und die durch die Auslassöffnung des Hohlkörpers nach außen verläuft und deren Austrittsöffnung (21) sich außerhalb des Hohlzylinders befindet und die um die Mittelachse durch einen Antriebsmotor (3) unmittelbar oder mittelbar drehbar ist.

## Beschreibung

Die Erfindung bezieht sich auf ein Trommelfördersilo zur Lagerung und Förderung von Schüttgütern, insbesondere Holzhackschnitzeln, bestehend aus einem Hohlkörper, dessen Stirnflächen durch die Innenwand miteinander verbunden sind und dessen Mittelachse in Bezug zur Erdoberfläche horizontal oder geneigt ausgerichtet ist, mit einer verschließbaren Einfüllöffnung in der Innenwand und mit einer Auslassöffnung in einer Stirnfläche oder in der Innenwand direkt angrenzend an die Stirnfläche.

Für Schüttgüter jeglicher Art ist die Lagerung in Silos eine seit langem bekannte und bewährte Methode. Dabei gibt es jedoch für jede besondere Ausprägung des jeweils zu lagernden und zu transportierenden Schüttgutes zahlreiche darauf angepasste Hilfseinrichtungen, die eine gleichmäßige und störungsarme Entnahme sicherstellen sollen. Dabei sind Holzhackschnitzel besonders schwierig zu befördernde Schüttgüter, da wegen der faserigen Struktur des Holzes die abgehackten und aufgesplitterten Schnitzel scharfe Kanten aufweisen und sich deshalb besonders leicht ineinander verhaken können. Die bisher dazu verwendeten Silos, Austragungseinrichtungen und Schneckenförderer weisen zahlreiche Spalten und Winkel auf, in denen sich die Holzhackschnitzel verfangen können. Relativbewegungen der Anlagenteile zueinander erzeugen Kraftkonzentrationen bei Verkeilungen der Hackschnitzel untereinander. Diese Kräfte können soweit ansteigen, dass Teile der Anlage beschädigt werden können.

Um ineinander verhakte Teile zu lösen, sind Änderungen der Drehrichtung des Fördermittels und/oder zusätzliche Losbrecheinrichtungen erforderlich. Aus diesem Grunde benötigen bisher bekannte Austrageinrichtungen erheblich größere Antriebe als für das reine Anheben des geförderten Gewichtes an Holzhackschnitzel erforderlich ist.

Nach aktuellem Stand der Technik wird bei der Mehrzahl der installierten Silos das Entleeren, Austragen oder Ausräumen des Füllgutes bevorzugt durch die Einwirkung der Schwerkraft auf das Füllgut erzielt. Das Charakteristikum eines Silos ist, dass sein Querschnitt erheblich größer ist als der Querschnitt der Austrittsöffnung. Folglich wird das Schüttgut während der Entleerung in diesem Bereich verdichtet, weil Kräfte quer zur Bewegungsrichtung auftreten. Wenn die Elemente des Schüttgutes eine sehr glatte und harte Oberfläche aufweisen, wie z. B. Kugeln oder Sand, können die Elemente leicht aneinander vorbeigleiten. Das Risiko von Verstopfungen ist bei diesen Schüttgütern deshalb vergleichsweise gering. Wie erwähnt zählen Holzhackschnitzel jedoch zu den Schüttgütern, die aufgrund ihrer faserigen Struktur und ihrer Neigung zum Splittern, insbesondere an den Stirnflächen eine extrem raue und scharfkantige Oberfläche aufweisen, mit der sie sich häufig in benachbarten Holzschnitzel verhaken und verkrallen. Dadurch entsteht der Effekt der sogenannten "Brücken-Bildung" oder "Kuppel-Bildung" im Schüttgut. Der Begriff beschreibt, dass sich im Schüttgut ein Hohlraum mit einer quer zur Bewegungsrichtung orientierten Wandung bildet, die oft wie die Kuppel eines Gewölbes geformt ist. Um diesem Effekt entgegen zu wirken, ist es sinnvoll, die einzelnen Elemente des Schüttgutes an den kritischen Stellen zumindest teilweise und vorübergehend in eine Rotation zu versetzen, damit sie sich nicht mit den benachbarten Elementen verhaken können.

Für vergleichsweise große Silos ist es üblich, dass sie senkrecht aufgestellt werden. Vorteil dieser Aufstellungsart ist es, das die Schwerkraft bei der Entleerung des Silos die Hauptfunktion übernimmt. Das ist bei Holzhackschnitzeln jedoch nicht uneingeschränkt vorteilhaft, weil dadurch das Risiko der Verkeilung und Verhakung anwächst. Zusätzlich ist der hochaufragende Turm eines so angeordneten Silos nur mit erheblichem Aufwand in der Nähe einer Beheizungsanlage anzuordnen. Meist werden dazu übereinander liegende Stockwerke benutzt werden müssen, was Durchbrüche in der Decke erfordert. Wenn bei gegebenem Lagervolumen die Höhe reduziert wird, wächst folgerichtig die Breite. Durch diese Änderung der Konfiguration wird jedes einzelne Holzelement nicht nur einen senkrechten Weg zurücklegen müssen, sondern auch eine Seitwärtsbewegung, bei der die Schwerkraft keinerlei Hilfe gewährt.

Bei großen Silos ist es Stand der Technik, dass diese seitwärts gerichtete Bewegung durch darauf spezialisierte Fördereinrichtungen ausgeführt wird. JP 59194939 beschreibt mehrere um eine hohle Mittelachse rotierende, radial ausgerichtete Schneckenförderer, die das Schüttgut auf der Oberfläche der Füllung aufnehmen und zum Fallrohr in die Mitte befördern. Nachteilig ist, dass dieses zentrale Fallrohr nur schwer zugänglich ist, um darin verkeilte Holzschnitzel zu entfernen. Ebenso neigt ein Schneckenförderer dazu, dass sich immer wieder Holzschnitzel zwischen der (betriebsnotwendigen) Wandung und der Schneckenwelle verhaken.

DE 10206686 versucht das Problem der sich verhakenden Schüttgutelemente dadurch zu lösen, dass zahlreiche stachelige Wellen tangential zur Rotationsausrichtung des Auslegers auf die Oberfläche der Schüttgutfüllung einwirken. Mit dem Eintauchen eines jeden Stachels in das Schüttgut wird jedes getroffene Element ein kleines Stück weiter bewegt und an die benachbarte Stachelwelle übergeben. Durch das Ineinanderkämmen der Stacheln wird vermieden, dass sich Schüttgutelemente zwischen benachbarten Stachelwellen verkeilen können. Nachteile dieser Konstruktion sind der hohe Aufwand sowie die Verdichtung durch den aufliegenden Austragungsarm. Eine Vorrichtung, um diesem Effekt entgegen zu wirken, fehlt.

Um das zentrale Fallrohr und dessen Probleme einzusparen beschreibt DE 199126899 die Entnahme des Schüttgutes von der Unterseite her. Dazu wird eine lineare Austragungseinrichtung - wie z. B. ein Schneckenförderer - auf einem Gleitrahmen an der Unterseite der Schüttgutfüllung entlang bewegt. Nachteilig ist, dass dieser Schneckenförderer zusätzlich zu seiner Förderarbeit auch die möglicherweise durch das große darauf lastende Gewicht der gesamten Füllung ineinander verklemmten Schüttgutelemente lockern muss bevor er sie zum Austragungsort befördern kann. Daher ist die Austragungseinrichtung vergleichsweise kräftig zu dimensionieren und erfordert eine vergleichsweise hohe Antriebsleistung.

Um der Verdichtung des Schüttgutes entgegen zu wirken, wird in DE 19706407 ein Bügel beschrieben, der um eine zentrale Achse rotiert. Durch seine Drehbewegung versetzt er die berührten Schüttgutelemente ebenfalls in Drehung und verhindert so das Verkeilen. Vorteilhaft ist die einfache Bügelkonstruktion. Nachteilig, dass insbesondere bei nur noch sehr geringer Befüllung des Silos, der gesamte Inhalt in Drehung versetzt wird und sich als zylinderförmiges Element im Silo weiterdreht und auf dessen Randwänden entlang schleift.

Als weitere Alternative ist es deshalb üblich, auf der unteren Fläche des Silos Arme rotieren zu lassen, die durch ihre gekrümmte Form das Schüttgut in die Mitte des Silos holen, von wo aus es in eine Rinne und/oder in eine Fördereinrichtung hineinfällt, mit der es zur Heizung weiter befördert wird. Diese Einrichtungen sind mit fest stehenden Armen für Silos von kreisförmigem Querschnitt bekannt. Als Ausführungsform für rechteckige Silos sind Austragungsarme aus federndem Material bekannt, die an den Außenwänden entlang streifen und sich durch ihre federnde Charakteristik dem wechselnden Durchmesser anpassen. Nachteilig an dieser Anordnung ist, dass stets die gesamte Masse des Füllgutes auf der untersten Schicht lastet und diese ineinander verklemmt. Um die jeweils untersten Holzhackschnitzel weiter zu bewegen, muss der Antrieb vergleichsweise sehr groß dimensioniert werden. Dennoch ist in der Regel eine stetige Förderbewegung nicht erreichbar, da sich die Hackschnitzel ineinander verhaken. Deshalb zählt es zum Stand der Technik, dass die Austragungsarme nach einer Umdrehung wieder um etwa eine drittel Umdrehung zurück bewegt werden müssen. Das ist erforderlich, um die Hackschnitzel aufzulockern, erhöht jedoch auch den Energiebedarf der Fördereinrichtung.

Die soeben beschriebenen, als Bodenrührwerk bezeichneten Austragungseinrichtungen werden häufig in rechteckigen Lagerräumen eingesetzt. Im Vergleich zu einem Silo mit kreisförmigem Querschnitt, auf dessen Durchmesser die Austragungseinrichtung optimiert ist, verbleiben in einem rechteckigen Lagerraum "tote Ecken" aus denen die Hackschnitzel nur selten mit heraus gerissen werden. Dadurch bilden sich Bereiche im Schüttgut aus, die dauerhaft in den Ecken liegen bleiben. Es entsteht das Risiko, dass sich Pilze und Schädlinge im Holz einnisten und durch ihren Befall für eine Reduzierung des Heizwertes und für eine schlechtere Verbrennung sorgen. Im Vergleich zu einer Auskleidung der Ecken mit einer glatten Oberfläche sorgen die hier festgeklemmten Hackschnitzel immer wieder für ein Hängen bleiben der darüber hinweg gezogenen, benachbarten Hackschnitzel.

Auf diesem Hintergrund hat sich die Erfindung die Aufgabe gestellt, ein Silo zum Lagern und Fördern von Schüttgut zu entwickeln, das mit einfachem, internen Aufbau herstellbar ist, das nur eine sehr geringe Anzahl von Drehlagern erfordert, das im Vergleich zur Entnahmemenge ebenso auf kleine wie auch auf größere Lager- und Fördermengen dimensionierbar ist, dessen Innenraum und dessen Fördereinrichtung möglichst wenig Ecken aufweisen, das nur eine einzige Engstelle auf dem gesamten Förderweg aufweist und ansonsten im Verhältnis zu den Abmessungen des Schüttgutes große Innenräume hat, wobei die einzige Engstelle für Wartungsarbeiten einfach zugänglich sein soll und das für eine sehr einfache Montage auf wenigen Befestigungspunkten ausgelegt ist.

Als Lösung schlägt die Erfindung ein Trommelfördersilo aus einem zylindrischen Hohlkörper vor, das dadurch gekennzeichnet ist, dass auf der Außenseite der Stirnfläche eine rohrförmige Schöpfvorrichtung ganz oder teilweise angeordnet ist, die senkrecht zur Mittelachse des Hohlkörpers ausgerichtet ist und die um die Mittelachse durch einen Antriebsmotor unmittelbar oder mittelbar drehbar ist und deren Austrittsöffnung auf der Mittelachse angeordnet ist und deren Länge dem inneren Radius des Hohlzylinders entspricht und die durch die Auslassöffnung hindurch in den Innenraum des Hohlzylinders hineinragt, wobei die Auslassöffnung entweder in der Mitte der Stirnfläche auf der Mittellinie oder am äußersten Rand der Stirnfläche angeordnet ist.

Ein Kerngedanke der Erfindung ist die sogenannte "Schöpfvorrichtung". Hierbei handelt es sich um ein Rohr, welches die Schüttgutelemente in der Nähe der Außenwand des Hohlzylinders aufnimmt, innerhalb des Rohres solange weiterbefördert, bis die Schüttgutelemente zum Zentrum des Silos gelangt sind, wo sie austreten und zum weiteren Transport bereit stehen. Die Kernidee der Erfindung ist es, sämtliche kinematischen Funktionen in der einfachsten Variante mit einem einzigen rotierenden Antrieb auszuführen, wobei dessen Drehzahl in sehr weiten Bereichen verändert werden kann, ohne dass die Förderung unterbrochen wird, sodass ein einfacher, lediglich aus- und einschaltbarer Motor vollkommen ausreicht. Weitere Regeleinrichtungen sind nicht erforderlich.
Durch die leicht geneigte Ausrichtung des Hohlzylinders oder bei einem waagerecht gelagerten Zylinder durch entsprechende Führungseinrichtungen auf der Innenwand befinden sich in dem Winkel zwischen der Stirnfläche und der zylindrischen Wandung stets Schüttgutelemente: Bei vollständig gefülltem Hohlzylinder auf dem gesamten Umfang, mit zunehmender Entleerung nur noch auf Teilen des Umfanges bis hin zu einem einzigen Punkt kurz vor der Entleerung. Der letzte Holzhackschnitzel einer Füllung wird also stets zu der kreisförmigen Umfangslinie der Stirnfläche gelangen. Von dieser Linie aus nimmt die Eintrittsöffnung der Schöpfvorrichtung das Schüttgutelement auf. Da der Innenraum kreisförmig ist, reicht eine einfache Rotationsbewegung, um sämtliche Punkte zu erreichen, an denen sich noch Schüttgutelemente befinden können.

Wenn die Positionen des Schöpfarmes mit der Stellung eines Zeigers auf dem Zifferblatt einer Zeituhr beschrieben werden, dann beginnt der Schöpfarm in einer senkrecht nach oben weisenden Position, der "zwölf Uhr Stellung", damit, Schüttgutelemente vor sich her zu treiben. Dabei wirkt die Eintrittsöffnung der Schöpfvorrichtung wie ein Trichter, in welchen das stets von neuem aufgelockerte Schüttgut hinein fällt, weshalb die Eintrittsöffnung stets an der Vorderseite der Schöpfvorrichtung angeordnet ist.

Wenn nur noch ein einziger Hackschnitzel im Trommelfördersilo liegt, dann gerät er in die 6-Uhr-Position der Stirnfläche. Die senkrecht nach unten weisende Schöpfvorrichtung wird den Holzhackschnitzel in dieser Position erfassen und am Rand der kreisförmigen Stirnfläche weiter schieben, weil er entweder durch die Schrägstellung des Silos oder durch Leitbleche innerhalb des Silos auf der Randlinie der Stirnfläche gehalten wird. Sobald die Schöpfvorrichtung die "9-Uhr-Stellung" erreicht hat, beginnt das Schüttgutelement sich in die Eintrittsöffnung der Schöpfvorrichtung hinein zu bewegen und gerät mit Fortsetzung der Drehung der Schöpfvorrichtung auf eine schiefe Ebene. Sie wird mit Fortsetzung der Drehung immer steiler und in der "12-Uhr-Position", wenn also die Schöpfvorrichtung senkrecht nach oben weist, zum Fallrohr. Spätestens in dieser Position fällt jedes Schüttgutelement, angetrieben von der Gravitationskraft, nach unten zum anderen Ende der Schöpfvorrichtung und erreicht so die Austrittsöffnung. Um das Element aus der Austrittsöffnung heraus zu bewegen, reicht in den meisten Fällen schon die kinetische Energie aus, die in dem Schüttgutelement gespeichert ist. Falls diese kinetische Energie nicht ausreichen sollte, drücken die nachfolgenden Schüttgutelemente auf das jeweilige Teilchen in der Austrittsöffnung und schieben es auf diese Weise aus der Austrittsöffnung heraus.

Auf der Basis dieser Grundidee schlägt die Erfindung verschiedene Ausführungsvarianten vor. In einer möglichen, aber von der Erfindung nicht bevorzugten Variante ist das Trommelfördersilo fest aufgebaut, wobei die Mittelachse gegenüber der Erdoberfläche etwas geneigt ist und zwar so weit, dass die Schwerkraft ausreicht, sowohl die anfängliche Befüllung als auch die allerletzten Teile stets an die Stirnfläche heranzudrücken. In dieser Variante rotiert lediglich die Schöpfvorrichtung und zwar um eine Drehachse, die im Mittelpunkt der kreisförmigen Stirnfläche angeordnet ist. Die Drehachse ist deshalb in der Mitte angeordnet, damit die Eintrittsöffnung der Schöpfvorrichtung stets an der Außenkante der Stirnfläche entlang streicht und auf diese Weise auch die letzten Schüttgutelemente noch erfassen kann. Der Vorteil dieser Konstruktion ist ihr sehr einfacher Aufbau mit nur einer einzigen Drehachse.

Ein gravierender Nachteil dieser Anordnung ist jedoch, dass innerhalb der Einrichtung ein Spalt zwischen der drehenden Stirnfläche und dem stehenden Hohlzylinder unvermeidbar ist. In diesen Spalt können Spitzen und Kanten der Holzhackschnitzel eindringen und durch Verkeilungen das benötigte Antriebsdrehmoment erhöhen, im Extremfall bis zu einer Blockade des Antriebes und/oder einer Beschädigungen des Fördersilos.Die Erfindung bevorzugt deshalb die einstückige Ausbildung des Fördersilos ohne jeden Spalt oder Zwischenraum zwischen drehenden und stehenden Teilen.

Die gesamte Einrichtung kann in einer weiteren Variante noch um ein Gelenk verschwenkt werden, welches quer zur Mittelachse an der Unterkante der Stirnfläche angeordnet ist. Damit ergibt sich die Möglichkeit, bei einem vollständig befüllten Trommelfördersilo eine geringe Neigung einzustellen, sodass die Kraft, mit der der Inhalt auf die Schöpfvorrichtung drückt nur sehr gering ist. Erst mit zunehmender Entleerung wird die Neigung weiter erhöht, sodass auch noch das allerletzte Schüttgutelement an der Innenfläche des Hohlzylinders entlang rutscht, bis es auf die Stirnfläche auftrifft.

In einer alternativen Betriebsart kann die Neigung eines derart verschwenkbaren Trommelfördersilos nur kurzfristig erhöht werden, um die gesamte Füllung weiter nach vorne zu bewegen. Nach dem Ende dieser Bewegung kann die Neigung wieder etwas reduziert werden, um den Druck der Füllung auf die Stirnfläche zu reduzieren.

In der soeben beschriebenen Variante rotiert die gesamte Schöpfvorrichtung im Innenraum des Hohlzylinders. Dabei wird nicht nur die Eintrittsöffnung innerhalb des Schüttgutes bewegt, sondern auch der rohr- oder rinnenförmige Bereich zwischen der Eintrittsöffnung und der Austrittsöffnung. Wenn die Schöpfvorrichtung rohrförmig gestaltet ist, dient der rohrförmige Bereich während der Drehung zusätzlich als Rührwerk für die Schüttgüter.

Wenn es gewünscht wird, dass diese Rührwerksfunktion weiter unterstützt wird, könne zusätzliche Stacheln, Noppen oder Leitbleche auf der Außenfläche angebracht werden. Dadurch wird eine zusätzliche Umwälzung des Schüttgutes erreicht, aber auch in aller Regel eine höhere Antriebsleistung zu installieren sein.

In einer weiteren Ausführungsform des Rohrquerschnittes für eine möglichst geringe Antriebsleistung streicht das Rohr mit einer glatten Fläche über die Ebene der Stirnfläche hinweg. Je kleiner der Spalt zwischen diesen beiden Flächen ist, desto geringer ist das Risiko eines Verhakens von Holzhackschnitzeln.

Als weitere Optimierung in Richtung auf eine Reduzierung der benötigten Antriebsleistung ist denkbar, dass die in Bewegungsrichtung vordere Kante dieser Fläche wie bei einem Schneeschieber durch eine spitze Kante in Bewegungsrichtung verlängert wird. Dadurch wird erreicht, dass sich die Schüttgutelemente langsam von der Stirnfläche abheben und über die Außenfläche des Rohres hinweg gleiten.

Falls der Widerstand gegen die Verdrehung der Schöpfvorrichtung innerhalb des Schüttgutes noch weiter reduziert werden soll, schlägt die Erfindung als eine weitere interessante Ausführungsform vor, dass die gesamte Stirnfläche gegenüber dem Trommelfördersilo drehbar gelagert wird. In dieser Variante ist es sinnvoll, dass lediglich die Eintrittsöffnung der Schöpfvorrichtung in den Innenraum des Hohlzylinders hineinragt. Es ist vorteilhaft, dabei die Eintrittsöffnung wie eine Schaufel auszubilden. Der rohrförmige Teil der Schöpfvorrichtung wird bei mitdrehender Stirnfläche bevorzugt an die Außenseite des Trommelfördersilos verlegt, um auf diese Weise eine an der Innenseite glatte Stirnfläche zu erzielen, die deshalb keine Kräfte zum Umrühren des Schüttgutes benötigt, sondern nur die Kräfte aus der Reibung der Schüttgutelemente auf der Stirnfläche überwinden muss.

Ein weiterer Vorteil dieser Konfiguration ist, dass im rohrförmigen Teil der Schüttgeometrie verschließbare Reinigungsöffnungen eingebaut werden können, die leicht zugänglich sind.

Als eine weitere Ausführungsvariante beschreibt die Erfindung, dass das gesamte Trommelfördersilo von der (vorderen) Stirnfläche über die zylinderförmigen Wände bis zur hinteren Stirnfläche drehbar gelagert ist. Auch in dieser Variante ist zu bevorzugen, dass die Schöpfvorrichtung nur mit ihrer Eintrittsöffnung und einer darauf aufgesetzten schaufelförmigen Führung in den Innenraum hineinragt. Der rohrförmige Teil der Schöpfvorrichtung sowie der Austritt liegen außerhalb der Trommel. In diesem Fall muss die gesamte Trommel drehbar gelagert werden. Dafür schlägt die Erfindung als Ausführungsvariante vor, dass nahe der vorderen Stirnfläche und nahe der hinteren Stirnfläche auf der Trommelaußenfläche ringförmige Laufbahnen angeordnet werden, auf denen die Trommel mit sehr geringer Toleranz einer idealen Kreisform entspricht. Diese Laufflächen wälzen sich auf vier Laufrädern ab, welche auf fest stehenden Lagerböcken angeordnet sind. Wenigstens eines dieser Laufräder wird vom Antriebsmotor in Drehung versetzt. Es fungiert als Reibrad, das die Drehung auf die Trommel überträgt. Dabei ist es sinnvoll, dass der Radius dieses Reibrades erheblich kleiner ist als der Radius des Trommelfördersilos, wodurch sich eine Übersetzung ergibt, die bei einem Antrieb durch einen Elektromotor sehr willkommen ist, da dessen Drehzahl dann sehr hoch gewählt werden kann, wodurch an den Kosten des Motors weiter gespart werden kann und/oder kein weiteres Getriebe erforderlich ist.

Alternativ ist es möglich, an wenigstens einer oder beiden Stirnflächen des Trommelfördersilos ein Drehlager anzuordnen. Dabei muss jedoch das vordere Drehlager so groß sein, dass es im Inneren genügend Raum für den Durchtritt des Fördergutes bietet. Dabei empfiehlt die Erfindung sehr nachdrücklich, dass dieser Durchmesser keinesfalls kleiner als der Durchmesser des Rohres in der Schöpfvorrichtung ist. Bevorzugt wird vielmehr, dass der Durchmesser des Lagers sogar noch etwas größer ist, um eine "Engstelle" für die hindurch fließenden Schüttgutelemente zu vermeiden.

In dieser Variante ist es eine weitere, sinnvolle Untervariante, dass der Körper des Trommelfördersilos teilweise als polygonale Säule ausgeformt wird. Dabei muss jedoch der vordere Teil in unmittelbarer Nachbarschaft der Schöpfvorrichtung weiterhin zylinderförmig bleiben, damit die darin kreisende Schöpfvorrichtung auch tatsächlich das allerletzte Holzhackschnitzel noch erfassen und aufnehmen kann. Im übrigen Bereich des Trommelfördersilos haben die durch die polygonale Formung entstehenden Vertiefungen und/oder Wülste, die in das Innere hineinragen die (je nach Philosophie) durchaus erwünschte Funktion, die Befüllung regelmäßig umzuwälzen, dadurch zu lockern und zu vermischen.

Als eine weitere, vorteilhafte Realisierungsform schlägt die Erfindung vor, dass die hintere Stirnfläche und der zylindrische Bereich des Trommelfördersilos fest steht und nur die vordere Stirnfläche mit der darauf angeordneten Schöpfvorrichtung drehbar gelagert ist und zusätzlich noch in Längsrichtung des Hohlzylinder in diesen hinein verschiebbar ist. In dieser Realisierungsform wird sich die Schöpfvorrichtung wie eine Tunnelbohrmaschine in die Schüttgutelemente hinein bewegen. Im Unterschied zu einer Tunnelbohrmaschine wird sie jedoch nicht nur das Lösen der Teile übernehmen, sondern zugleich auch den Abtransport. Dabei ist es denkbar, dass sich die Schöpfvorrichtung alleine als rotierender Arm in das Schüttgut hinein arbeitet. Vorteil dieser Anordnung ist, dass die Stirnfläche steht, und nur auf der relativ kurzen Umfangslinie um das Rohr herum eine Abdichtung gegen ein Austreten des Füllgutes erforderlich ist.

Um den Aufwand zur Abstützung des in die Füllung hinein ragenden Rohres zu vermeiden, ist es zu bevorzugen, dass sich die Schöpfvorrichtung gemeinsam mit der Stirnfläche dreht. Dann ist zwar die Umfangslinie für die Abdichtung erheblich länger, jedoch die LängsFührung der Einrichtung auf einer größeren Fläche aufbaubar und dadurch einfacher.

Eine Variante mit weiteren Vorteilen ergibt sich dadurch, dass die Schöpfvorrichtung und der Hohlkörper getrennte Antriebe haben. Der Vorteil dieses Konzeptes ist, dass die Schöpfvorrichtung solange alleine arbeiten kann, wie sich noch genügend Schüttgut in ihrem Aufnahmebereich befindet. Erst wenn diese Menge abgebaut ist, wird der zweite Antrieb für das Trommelfördersilo in Drehung versetzt. Dadurch wird die Bewegung der restlichen Füllung in Richtung zur vorderen Stirnfläche unterstützt -selbst bei einem Trommelfördersilo mit glatter Innenfläche, welches lediglich leicht zur Erdoberfläche geneigt angeordnet ist.

Als eine weitere Variation der soeben geschilderten Umsetzungsform werden auf der Innenwand des Hohlkörpers Noppen, Stachel, Rippen, Leitbleche und/oder andere in den Innenraum hineinragende Elemente und/oder Kerben, Kannelierungen, Nuten und/oder andere in die Innenwand hineinragende Vertiefungen angeordnet. Sie alle haben die Funktion, die Schüttgutelemente voneinander zu trennen, sie in eine teilweise rotierende Bewegung zu versetzen, dadurch zu lockern und auf diese Weise den Weitertransport zu erleichtern.

Wenn die vorerwähnten Elemente und/oder Vertiefungen auf der Innenwand linienförmig angeordnet sind, und zwar auf einer Schraubenlinie, wird dadurch die gesamte Füllung gegenüber dem Zylinder weiter bewegt und kann auf diese Weise immer wieder an die Stirnfläche mit der Schöpfvorrichtung herangeführt werden.

Es zählt zum Charakteristikum der Schöpfvorrichtung, dass sie von der "9-Uhr-Stellung" bis zur "12-Uhr-Stellung" Schüttgutmaterial fördert; in den andern Winkelstellungen jedoch nur sehr wenig oder gar nichts.

Zum Beispiel zur Beschickung eines Ofens mit Holzhackschnitzeln kann dieser intermittierende Brennstoffstrom durchaus vorteilhaft sein, da es vor dem Brennraum eines Ofens in der Regel eine Tür zur Verhinderung von sogenanntem Rückbrand gibt, die lediglich zeitweise geöffnet wird, um weiteren Brennstoff nachzufüllen.

Für Fälle in denen jedoch ein gleichmäßiger Strom von Schüttgutmaterial gefordert ist, ist es eine mögliche Variante, die Schöpfvorrichtung von der "12-Uhr-Stellung" bis zur "9-Uhr-Stellung" mit einer höheren Drehzahl zu bewegen und von der "9-Uhr-Stellung" bis zur "12-Uhr-Stellung", also während das Material austritt, nur sehr langsam weiter zu bewegen.

Falls jedoch die Schöpfvorrichtung gleichmäßig umläuft und dadurch das Schüttgut stoßweise fördert, ist es eine sinnvolle Variante, an die Auslassöffnung eine kleine Homogenisierungstrommel anzuordnen, die an einer Stirnfläche offen ist und an ihrer Innenwand mit schraubwendelförmig angeordneten und in den Innenraum hineinragenden Führungsrippen ausgestattet ist. Die Größe dieser Homogenisierungstrommel sollte so gewählt sein, dass sie wenigstens die Schüttgutmenge eines Stoßes aufnehmen kann. Diese Schüttgutmaterialmenge wird in der Homogenisierungstrommel zwischengelagert, wobei die Steigung der Führungsrippen und die Drehzahl der Homogenisierungstrommel so gewählt werden sollte, dass diese Materialmenge über die gesamte Zykluszeit bis zum Eintreffen des nächsten Materialstoßes verteilt wird.

Bereits erwähnt ist, dass die Schöpfvorrichtung bei rohrförmiger Ausbildung vorteilhafter Weise eine von außen zugängliche Klappe aufweisen sollte, durch welche der Innenraum der Schöpfvorrichtung von außen gereinigt werden kann und/oder Verstopfungen manuell entfernt werden können.

Ferner ist es sinnvoll, den Querschnitt in der Eintrittsöffnung kleiner auszubilden als den Querschnitt des Rohres, damit einmal durch die Eintrittsöffnung hindurch getretene Schüttgutelemente innerhalb des Rohres bei ihrer Bewegung durch das Rohr hindurch einen reichlich bemessenen Bewegungsraum vorfinden und sich dadurch nicht aufeinander pressen, was das Risiko von Verstopfungen und/oder von ineinander Verkeilen reduziert.

Bei sämtlichen, vorerwähnten Varianten mit Schöpfvorrichtung innerhalb des Innenraumes ist es auch möglich, dass die Schöpfvorrichtung als Rinne ausgebildet wird. Diese Konfiguration hat den Vorteil, dass ineinander verklemmte Schüttgutelemente bei weiterer Verdrehung der Schöpfvorrichtung aus der Rinne heraus fallen und wieder in den Innenraum des Trommelfördersilos zurück gelangen. Dort werden sie durch die weitere Umwälzung in Drehbewegung versetzt und voneinander getrennt, sodass sie dann als einzelne Elemente wieder ordnungsgemäß in die Schöpfvorrichtung eintreten können.

Im Folgenden sollen weitere Einzelheiten und Merkmale der Erfindungen anhand von Beispielen näher erläutert werden. Diese sollen die Erfindung jedoch nicht einschränken, sondern nur erläutern. Es zeigt in schematischer Darstellung:
- **Figur 1**: Schrägbild eines Trommelfördersilos mit Schöpfvorrichtung in der Stirnfläche
- **Figur 2**: Stirnfläche des Trommelfördersilos aus Figur 1, zum Teil aufgebrochen dargestellt
- **Figur 3**: dreidimensionales Schnittbild eines Trommelfördersilos mit innen angeordneter Schöpfvorrichtung und separat angetriebenem Silo
- **Figur 4**: Stirnfläche des Trommelsilos aus Figur 2 mit zusätzlicher Homogenisierungstrommel

Die Figuren zeigen im Einzelnen:

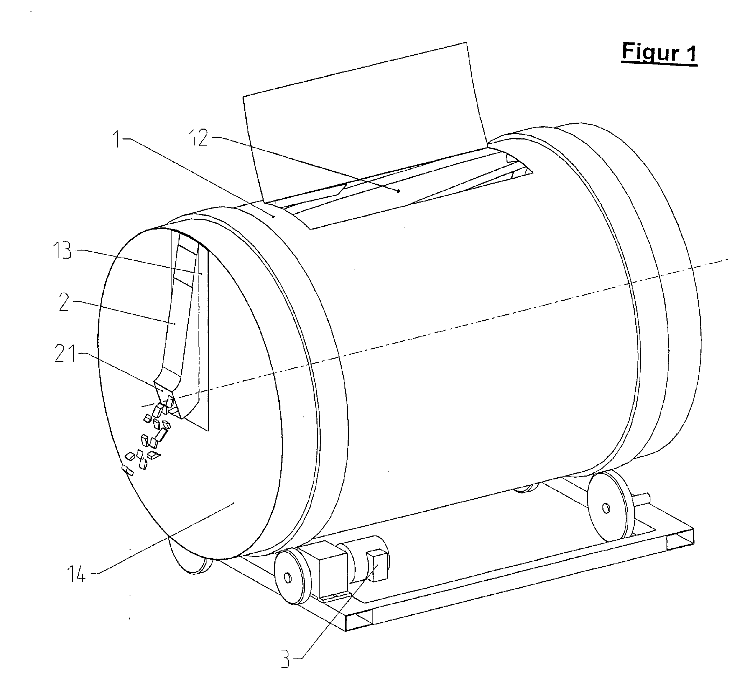

In **Figur 1** ist in dreidimensionaler Ansicht ein Trommelfördersilo gezeichnet, das vollständig drehbar gelagert ist, hier auf vier Rollen, welche auf dem Umfang des Trommelfördersilos ablaufen. An einer Rolle ist der Antriebsmotor 3 angeflanscht und dreht mit der Rolle als Reibrad den gesamten Hohlkörper 1. Auf der zylindrischen Wand des Trommelfördersilos ist die Einfüllöffnung 12 erkennbar, in welche das Schüttgutmaterial bei stehendem Trommelfördersilo nach Öffnen der Klappe eingefüllt werden kann. Vor dem Start des beladenen Trommelfördersilos muss sichergestellt sein, dass die Klappe wieder verschlossen ist.

An der Stirnfläche 14 des Trommelfördersilos ist die darin eingebaute Schöpfvorrichtung 2 zu sehen. Gezeichnet ist, wie aus der Austrittsöffnung 21 Schüttgutmaterial heraustritt. Die rechteckige Auslassöffnung 13 des Hohlkörpers 1 ist in diesem Ausführungsbeispiel durch eine rechteckige Platte abgedeckt, in welche die Schöpfvorrichtung 2 eingebaut ist.

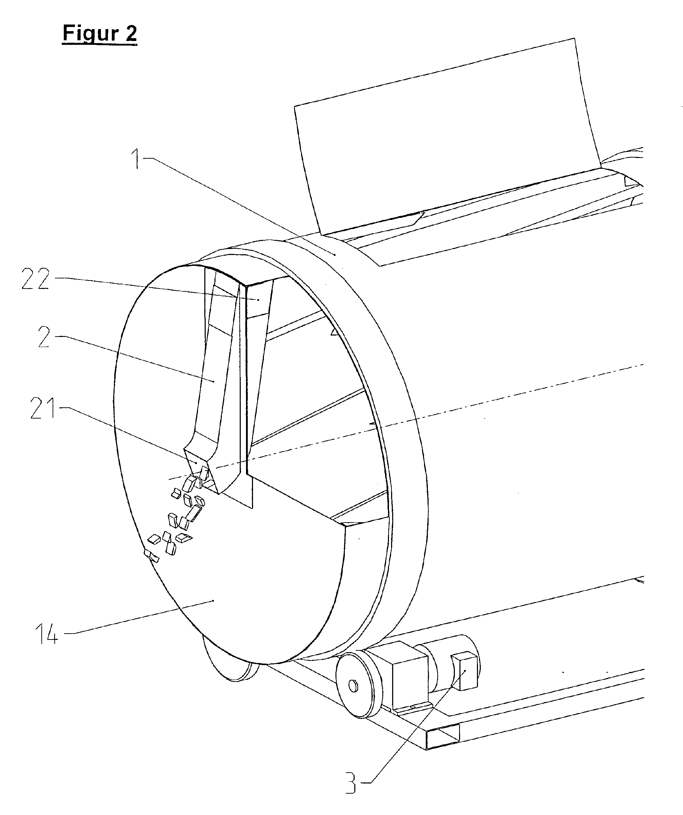

In **Figur 2** ist der in Figur 1 dargestellte Hohlkörper 1 im Bereich der Stirnfläche 14 aufgebrochen dargestellt, so dass die Schöpfvorrichtung 2 sowohl mit ihrem nach außen herausragenden Teil als auch mit dem in den Innenraum hineinragenden Teil sichtbar wird. Die aufgebrochene Darstellung lässt auch die Eintrittsöffnung 22 der Schöpfvorrichtung 2 erkennbar werden.
In Figur 2 wird nachvollziehbar, dass die Eintrittsöffnung 22 im Innenraum des Hohlkörpers 1 an der Stelle seines größten Durchmessers angeordnet ist und die Austrittsöffnung 21 sich außerhalb des Hohlzylinders befindet.

In Figur 2 werden durch das teilweise Aufbrechen der Stirnseite sowie durch den aufgeklappten Deckel die rippenförmigen Leitbleche sichtbar, die an der Innenwand des Hohlkörpers angebracht sind. Sie trennen immer wieder die Schüttgutelemente von der Innenwand, die durch Haftreibung mitgenommen werden. Auf diese Weise verhindern die Leitbleche, dass sich die Schüttgutelemente ineinander verkeilen.

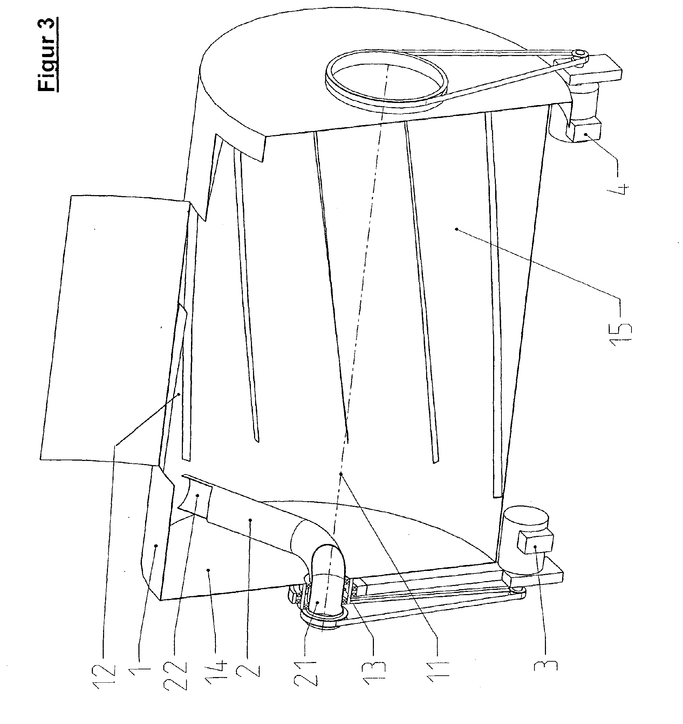

In **Figur 3** ist eine andere Ausführungsform eines erfindungsgemäßen Trommelfördersilos gezeichnet. Dargestellt ist der Schnitt entlang einer senkrechten und zur Mittelachse 11 parallelen Ebene. Nur im Bereich der hinteren Stirnseite ist die Schnittebene treppenförmig versetzt, so dass das Riemenrad, welches auf der hinteren Stirnseite angeordnet ist, vollständig sichtbar wird.

In der dargestellten Variante ist der Hohlkörper 1 mit zwei Lagern auf seiner Mittelachse drehbar gelagert, von denen nur das linke eingezeichnet ist. Dieses Drehlager ist hohl ausgeführt, sodass die Schöpfvorrichtung 2 durch das (äußere, große) Lager hindurch bis zur Ihrer Austrittsöffnung 21 verläuft. Innerhalb dieses großen Lagers ist die Schöpfvorrichtung in einem zweiten, kleineren DoppelKugellager gegen den Hohlkörper 1 drehbar gelagert.
An der Außenseite der Schöpfvorrichtung 2 im Bereich der Austrittsöffnung 21 ist das Abtriebsrad für einen Riemen dargestellt, der vom Antriebsmotor 3 in Drehung versetzt wird.

Der Hohlkörper 1 ist in dieser Variante an der rechts dargestellten Stirnfläche mit einem großen Riemenrad ausgestattet, auf dem ein zweiter Riemen läuft, der die Verbindung zum zweiten Antriebsmotor 4 herstellt.

In Figur 3 wird nachvollziehbar, dass in dieser Variante die Schöpfvorrichtung 2 mittels des Antriebsmotors 3 unabhängig vom Hohlkörper 1 drehbar ist. Der Hohlkörper 1 wird nur vom Antriebsmotor 4 bewegt.
Vorteil dieser Anordnung ist, dass zur Förderung von Schüttgutelementen nur die Schöpfvorrichtung 2 bewegt werden muss, und zwar solange, wie noch Schüttgutelemente im Bereich der Schöpfvorrichtung liegen. Die Energie zur Bewegung der gesamten Füllmenge des Trommelfördersilos wird eingespart. Erst wenn alle Schüttgutelemente im Bereich der linken Stirnfläche 14 abgeschöpft sind, muss der Hohlkörper 1 in Drehung versetzt werden. Über die schräg zur Mittelachse 11 auf der Innenwand 15 angeordneten Rippen fördert der Hohlkörper 1 mit einer ganz kurzen Drehbewegung wieder Schüttgutmaterial in den Schöpfbereich der Schöpfvorrichtung 2.

In Figur 3 wird jedoch auch als Nachteil der dargestellten Variante deutlich, dass sich die Schöpfvorrichtung relativ zur Stirnfläche 14 bewegt. Dadurch entsteht das Risiko, dass sich Schüttgutelemente zwischen der drehenden Schöpfvorrichtung 2 und der stehenden Stirnfläche 14 verkeilen können. Dadurch steigt zumindest das Antriebsdrehmoment bis hin zu einer Blockade, die durch Reversieren der Schöpfvorrichtung oder gar durch Stopp der Anlage und manuellen Eingriff zu beseitigen ist.

Aus diesem Grunde bevorzugt die Erfindung die in den Figuren 1 und 2 dargestellte Ausführungsform, bei der sich die Schöpfvorrichtung nicht gegen den Hohlkörper 1 bewegt und also nur ein einziger Antrieb erforderlich ist.

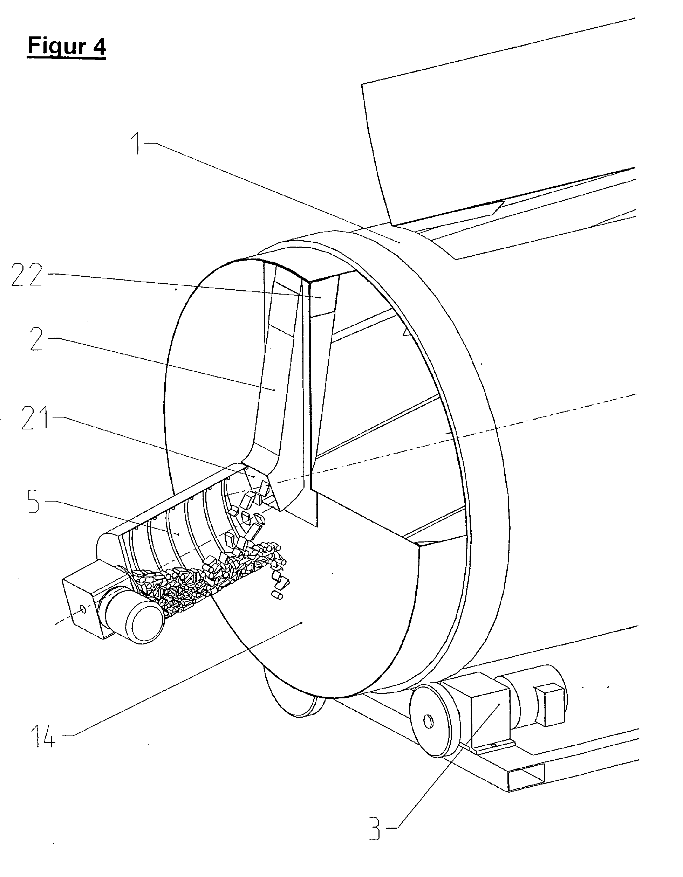

In **Figur 4** ist dargestellt, wie das in Figur 2 gezeichnete Trommelfördersilo durch eine zusätzliche Homogenisierungstrommel 5 ergänzt wird. Diese zusätzliche Homogenisierungstrommel ist entlang ihrer Mittelachse geschnitten dargestellt. Dadurch ist zu erkennen, wie die Austrittsöffnung 21 der Schöpfvorrichtung in den Innenraum der Homogenisierungstrommel 5 mündet.

In Figur 4 wird nachvollziehbar, wie stoßweise in den Innenraum der Homogenisierungstrommel 5 eintretendes Schüttgut durch Drehung der Homogenisierungstrommel 5 über schraubenförmige Führungsrippen an der Innenwand kontinuierlich zur Öffnung gefördert wird und dort in einem gleichmäßigen Strom austritt.

### Bezugszeichenliste

- 1: Hohlkörper, zylindrisch, zur Aufnahme des Schüttgutes
- 11: Mittelachse des Hohlkörpers 1, zur Erdoberfläche horizontal oder schräg ausgerichtet ist,
- 12: Einfüllöffnung des Hohlkörpers 1, verschließbar
- 13: Auslassöffnung, in der unteren Stirnfläche 14 des Hohlkörpers 1
- 14: Stirnfläche, an der unteren Seite des Hohlkörpers 1
- 15: Innenwand des Hohlkörpers 15
- 2: Schöpfvorrichtung, rohr- oder rinnenförmig, radial zum Hohlkörper 1 orientiert, an der Stirnfläche 14 angeordnet
- 21: Austrittsöffnung der Schöpfvorrichtung 2, auf der Mittelachse 11 angeordnet
- 22: Eintrittsöffnung der Schöpfvorrichtung 2
- 3: Antriebsmotor, rotierend, zur Drehung der Schöpfvorrichtung 2 und ggf. der Stirnfläche 14 und ggf. des gesamten Hohlkörpers 1
- 4: Antriebsmotor, rotierend, nur zur Drehung des Hohlkörpers 1, bei Einzelantrieb der Schöpfvorrichtung 2
- 5: Homogenisierungstrommel, außerhalb des Hohlkörpers 1, zur Homogenisierung des stoßweise aus der Austrittsöffnung der Schöpfvorrichtung 2 heraustretenden Schüttgutes

## Patentansprüche

1. Trommelfördersilo zur Lagerung und Förderung von Schüttgütern, insbesondere Holzhackschnitzeln, bestehend aus einem Hohlkörper 1,
- dessen Stirnflächen 14 durch die Innenwand 15 miteinander verbunden sind und
- dessen Mittelachse 11 in Bezug zur Erdoberfläche horizontal oder geneigt ausgerichtet ist,
mit einer verschließbaren Einfüllöffnung 12 in der Innenwand 15 und mit einer Auslassöffnung 13 in einer Stirnfläche 14 oder in der Innenwand 15 direkt angrenzend an die Stirnfläche
**dadurch gekennzeichnet, dass**
der Hohlkörper 1 in Bezug auf seine Mittelachse 11
- rotationssymmetrisch oder
- als regelmäßiger Pyramidenstumpf geformt ist und
- die Stirnflächen die Form eines Kreises oder eines regelmäßigen Polygons aufweisen und
auf oder in der größeren der beiden Stirnflächen 14 eine rohrförmige Schöpfvorrichtung 2 angeordnet ist,
- deren Eintrittsöffnung 22 im Innenraum des Hohlkörpers 1 an der Stelle seines größten Durchmessers angeordnet ist und
- die durch die Auslassöffnung 13 des Hohlkörpers 1 nach außen verläuft und
- deren Austrittsöffnung 21 sich außerhalb des Hohlzylinders befindet und
- die um die Mittelachse 11 durch einen Antriebsmotor 3 unmittelbar oder mittelbar drehbar ist.

2. Trommelfördersilo nach Anspruch 1, **dadurch gekennzeichnet, dass** der gesamte Hohlkörper 1 um die Mittelachse 11 drehbar gelagert ist.

3. Trommelfördersilo nach Anspruch 1 oder 2, **dadurch gekennzeichnet, dass** der Hohlkörper 1 zumindest in der Nähe der Stirnfläche 14 mit der Schöpfvorrichtung 2 als Hohlzylinder geformt ist.

4. Trommelfördersilo nach Anspruch 3, **dadurch gekennzeichnet, dass** nur die Stirnfläche 14 des Hohlkörpers 1 mitsamt der Schöpfvorrichtung 2 um die Mittelachse 11 drehbar gelagert ist.

5. Trommelfördersilo nach Anspruch 4, **dadurch gekennzeichnet, dass** die Schöpfvorrichtung 2 zusätzlich in Längsrichtung des Hohlzylinders 1 verschiebbar ist.

6. Trommelfördersilo nach Anspruch 5 **dadurch gekennzeichnet, dass** die Stirnfläche 14 mit der Schöpfvorrichtung 2 verbunden ist und zusammen mit dieser in Längsrichtung des Hohlzylinders 1 verschiebbar ist.

7. Trommelfördersilo nach einem der vorhergehenden Ansprüche, **dadurch gekennzeichnet, dass** die Mittelachse 11 des Hohlkörpers 1 schräg zur Erdoberfläche ausgerichtet ist und der Hohlkörper 1 ebenfalls mittels des Antriebsmotors 3 drehbar ist.

8. Trommelfördersilo nach Anspruch 4, **dadurch gekennzeichnet, dass** der Hohlkörper 1 durch einen eigenen Antriebsmotor 4 drehbar ist.

9. Trommelfördersilo nach einem der vorhergehenden Ansprüche, **dadurch gekennzeichnet, dass** an der Innenwand 15
- Noppen und/oder
- Stacheln und/oder
- Rippen und/oder
- Leitbleche und/oder
andere in den Innenraum hineinragende Elemente und/oder
- Kerben und/oder
- Kannelierungen und/oder
- Nuten und/oder
andere in die Innenwand hineinragende Vertiefungen
angeordnet sind.

10. Trommelfördersilo nach Anspruch 9, **dadurch gekennzeichnet, dass** die Elemente und/oder Vertiefungen auf der Innenwand 15 linienförmig angeordnet sind,

11. Trommelfördersilo nach Anspruch 10, **dadurch gekennzeichnet, dass** die Linien in der Form einer Wendel oder eine Gewindes verlaufen.

12. Trommelfördersilo nach einem der vorhergehenden Ansprüche **dadurch gekennzeichnet, dass** an die Austrittsöffnung 21 ein Rohr angeschlossen ist, das in eine zusätzliche Homogenisierungstrommel 5 hineinragt, welche
- an einer Stirnfläche offen ist und
- an ihrer Innenwand mit schraubwendelförmig angeordneten und in den Innenraum hineinragenden Führungsrippen ausgestattet ist.

13. Trommelfördersilo nach einem der vorhergehenden Ansprüche **dadurch gekennzeichnet, dass** die Schöpfvorrichtung 2
- rohrförmig ausgebildet ist und
- an der Außenseite der Stirnwand 14 angeordnet ist und
- aus der Auslassöffnung 13 in der Stirnwand 14 heraustritt,
- wobei die Austrittsöffnung auf der Mittelachse 11 des Hohlkörpers 1 angeordnet ist.

14. Trommelfördersilo nach einem der vorhergehenden Ansprüche, **dadurch gekennzeichnet, dass** die Schöpfvorrichtung 2 mit einer verschließbaren Reinigungsklappe versehen ist.

15. Trommelfördersilo nach einem der vorhergehenden Ansprüche **dadurch gekennzeichnet, dass** die Schöpfvorrichtung 2 an der Innenseite der Stirnwand 14 angeordnet ist, wobei die in Rotationsrichtung nach vorne weisende Fläche zwecks erleichterter Abweisung der von der Schöpfvorrichtung verdrängten Hackschnitzel in einem spitzen Winkel zu ihrer Drehachse ausgerichtet ist.
